(19) Europäisches Patentamt / European Patent Office / Office européen des brevets

(11) **EP 4 550 295 A1**

(12) **DEMANDE DE BREVET EUROPEEN**

(43) Date de publication:
07.05.2025 Bulletin 2025/19

(21) Numéro de dépôt: 24210053.5

(22) Date de dépôt: 31.10.2024

(51) Classification Internationale des Brevets (IPC):
$G08G\ 5/00^{(2025.01)}$     $G06N\ 3/045^{(2023.01)}$
$G06V\ 20/52^{(2022.01)}$     $G08G\ 5/22^{(2025.01)}$
$G08G\ 5/72^{(2025.01)}$

(52) Classification Coopérative des Brevets (CPC):
G06N 3/045; G06V 20/52; G08G 5/22; G08G 5/727

(84) Etats contractants désignés:
AL AT BE BG CH CY CZ DE DK EE ES FI FR GB GR HR HU IE IS IT LI LT LU LV MC ME MK MT NL NO PL PT RO RS SE SI SK SM TR
Etats d'extension désignés:
BA
Etats de validation désignés:
GE KH MA MD TN

(30) Priorité: 31.10.2023 FR 2311852

(71) Demandeurs:
• THALES
92190 Meudon (FR)
• Université Paris-Saclay
91190 Gif-sur-Yvette (FR)
• Centre National de la Recherche Scientifique
75016 Paris (FR)

(72) Inventeurs:
• ATIENZA, Nicolas
91767 PALAISEAU CEDEX (FR)
• LABREUCHE, Christophe
91767 PALAISEAU CEDEX (FR)
• SEBAG, Martine
94800 VILLEJUIF (FR)
• COHEN, Johanne
91400 ORSAY (FR)
• HONORE, Nicolas
94628 RUNGIS (FR)

(74) Mandataire: Lavoix
2, place d'Estienne d'Orves
75441 Paris Cedex 09 (FR)

(54) **PROCÉDÉ DE CONTRÔLE DE L'OBSERVATION PAR UN SYSTÈME DE PISTAGE D'UN ESPACE ET DISPOSITIF ASSOCIÉ**

(57) La présente invention concerne un procédé de contrôle de l'observation par un système de pistage (10) d'un espace, le procédé étant mis en oeuvre par un module de contrôle (22) faisant partie du système de pistage (10) et comportant :
- une étape de formation de vignettes, chaque vignette rassemblant un ensemble des données accessibles au système de pistage (10) sur une zone respective et un intervalle de temps prédéfini, les zones associées à chaque vignette pavant l'espace observé par le système de pistage (10) et l'ensemble des intervalles de temps prédéfinis couvrant un intervalle de temps d'observation, et
- une étape de contrôle de l'observation par un système de pistage (10) de l'espace correspondant à au moins une vignette par application d'une fonction de contrôle sur l'ensemble des données de l'au moins une vignette.

FIG.2

EP 4 550 295 A1

**Description**

La présente invention concerne un procédé de contrôle de l'observation par un système de pistage d'un espace. L'invention se rapporte aussi à un module de contrôle et un système de pistage associés.

L'invention proposée se situe dans le domaine du contrôle de trafic aérien.

Le contrôle de l'espace aérien est assuré par un suivi de l'ensemble des aéronefs. Il s'agit de superviser le trafic aérien pour prévenir les collisions entre aéronefs et contrôler la circulation, tant en vol de croisière qu'aux abords des aéroports - décollage et atterrissage.

Pour mettre en oeuvre un tel contrôle, les contrôleurs aériens utilise un système de surveillance du trafic aérien basé sur un pistage des avions qui s'appelle un système de pistage. Le système de pistage est capable en temps réel d'estimer à partir de données provenant de capteurs la meilleure estimation possible de la position, du cap et de la vitesse de chaque aéronef dans une région d'information de vol donnée.

La région d'information de vol est souvent désignée par l'acronyme FIR renvoyant à la dénomination anglaise correspondante de « *Flight Information Region* ».

L'ensemble des données estimées forment une piste.

La qualité de l'estimation de la piste (pistage) varie en fonction du paramétrage du système de pistage, de la qualité des données acquises par les capteurs ou encore de données environnementales comme la topologie du terrain ou la météo.

A ce titre, il est souhaitable pour un contrôleur aérien de connaître la qualité de l'estimation des pistes reconstruites par le système de pistage.

Pour cela, il est connu d'utiliser les exigences de la norme ESASSP qui est détaillée dans le document intitulé « EUROCONTROL Spécification for ATM Surveillance System Performance » (Volume 1) dont l'ISBN est 978-2-87497-022-1 et qui a été publiée en mars 2012.

Plus précisément, il est évalué un ensemble d'exigences définies par cette norme ESASSP par comparaison entre les sorties du système de pistage et une estimation de la trajectoire idéale des aéronefs.

La trajectoire idéale est donc une trajectoire reconstruite pouvant être calculée uniquement hors-ligne.

De ce fait, une telle évaluation fournit uniquement une évaluation a posteriori de la qualité de l'évaluation des pistes par le système de pistage sur la région d'information de vol (FIR).

Il existe donc un besoin pour un procédé permettant d'évaluer la qualité du pistage effectuée par un système de pistage.

A cet effet, la description décrit un procédé de contrôle de l'observation par un système de pistage d'un espace, le procédé étant mis en oeuvre par un module de contrôle faisant partie du système de pistage, le procédé de contrôle comportant :

- une étape de formation de vignettes, chaque vignette rassemblant un ensemble des données accessibles au système de pistage sur une zone respective et un intervalle de temps prédéfini, les zones associées à chaque vignette pavant l'espace observé par le système de pistage et l'ensemble des intervalles de temps prédéfinis couvrant un intervalle de temps d'observation, les données comportant au moins des données de capteurs, et
- une étape de contrôle de l'observation par un système de pistage de l'espace correspondant à au moins une vignette par application d'une fonction de contrôle sur l'ensemble des données de l'au moins une vignette.

Selon des modes de réalisation particuliers, le procédé de contrôle présente une ou plusieurs des caractéristiques suivantes, prise(s) isolément ou selon toutes les combinaisons techniquement possibles :

- l'ensemble des données de chaque vignette comprennent une trajectoire reconstruite.
- le système de pistage émet en sortie des données calculées, l'ensemble des données de chaque vignette comprenant les données calculées.
- la fonction de contrôle est une fonction de détection de la présence éventuelle d'une anomalie dans la vignette.
- la fonction de détection d'anomalies est obtenue par un procédure d'apprentissage, la procédure d'apprentissage comportant :

  - l'apprentissage d'une représentation vectorielle des vignettes, et
  - l'obtention d'une fonction de détection d'anomalies à partir de la représentation vectorielle apprise.

- l'étape d'apprentissage comprend l'apprentissage d'une première sous-fonction à partir d'un jeu de données labellisé pour obtenir une première sous-fonction apprise propre à mettre en oeuvre une tâche prétexte, la première sous-fonction apprise étant un réseau de neurones comportant une pluralité de couches de neurones, la représentation vectorielle étant l'avant-dernière couche de la première sous-fonction apprise.

- la première sous-fonction est un réseau neuronal résiduel.
- l'étape d'obtention est mise en oeuvre à l'aide de machines à vecteurs de support à classe unique.
- l'étape d'obtention est mise en oeuvre à l'aide d'un réseau de neurones adapté pour mesurer la distance d'une vignette à un ensemble de vignettes considérées comme normales.
- le procédé de contrôle comporte une étape d'identification d'une cause possible de la présence d'une anomalie par application d'une fonction d'identification sur la ou les vignettes dans lesquelles la présence d'une anomalie a été détectée à l'étape de mise en oeuvre, l'étape d'identification étant réalisée par le module de correction d'anomalies.
- le procédé de contrôle comporte un test d'une action correctrice associée à la cause identifiée.
- le système de pistage est propre à collecter des données provenant de plusieurs capteurs, la cause étant une défaillance d'un capteur et l'action correctrice étant la suppression de la prise en compte des données provenant du capteur présentant la défaillance.
- l'étape d'identification comprend :

  - la génération des vignettes correspondant aux données accessibles à plusieurs sous-ensembles de capteurs distincts,
  - la détection d'anomalies dans les vignettes générées par mise en oeuvre du procédé de détection, et
  - la déduction du ou des capteurs causant l'anomalie.

- la fonction de contrôle est une fonction de calcul de la performance du système de pistage.

La description décrit aussi un module de contrôle de l'observation par un système de pistage d'un espace, le module de contrôle étant propre à :

- former des vignettes, chaque vignette rassemblant un ensemble des données accessibles au système de pistage sur une zone respective et un intervalle de temps prédéfini, les zones associées à chaque vignette pavant l'espace observé par le système de pistage et l'ensemble des intervalles de temps prédéfinis couvrant un intervalle de temps d'observation, les données comportant au moins des données de capteurs, et
- contrôler l'observation par un système de pistage de l'espace correspondant à au moins une vignette par application d'une fonction de contrôle sur l'ensemble des données de l'au moins une vignette .

La description propose également un système de pistage muni d'un module de contrôle tel que précédemment décrit.

Dans la présente description, l'expression « propre à » signifie indifféremment « adapté pour », « adapté à » ou « configuré pour ».

Des caractéristiques et avantages de l'invention apparaîtront à la lecture de la description qui va suivre, donnée uniquement à titre d'exemple non limitatif, et faite en référence aux dessins annexés, sur lesquels :

- la figure 1 est une représentation schématique d'un exemple de système de pistage en interaction avec un ensemble de capteurs,
- la figure 2 est un schéma bloc de mise en oeuvre d'un exemple de procédé de détection d'anomalies dans un espace observé par le système de pistage,
- la figure 3 est une représentation de simulations de mise en oeuvre du procédé de détection d'anomalies selon la figure 2, et
- la figure 4 est une représentation schématique d'un autre exemple de système de pistage en interaction avec un ensemble de capteurs,

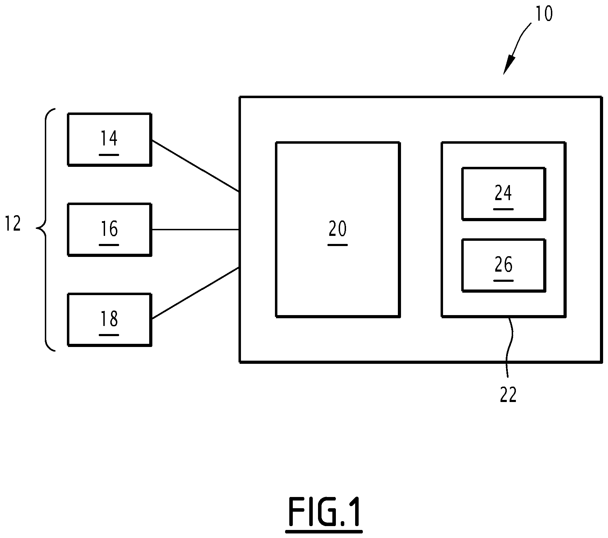

La figure 1 illustre schématiquement un système de pistage 10 en interaction avec un ensemble 12 de capteurs.

Le système de pistage 10 est propre à observer un espace aérien pour déterminer les trajectoires des aéronefs passant dans un espace observé.

Cela rend possible d'effectuer un contrôle du trafic aérien dans l'espace considéré.

Pour cela, le système de pistage 10 est propre à collecter des données provenant de l'ensemble des capteurs et à analyser les données collectées.

Le système de pistage 10 émet en sortie des données calculées.

La vitesse, la position et le cap de chaque aéronef passant dans l'espace observé sont des exemples de données calculées.

Avantageusement, à ces valeurs, le système de pistage 10 vient ajouter des données permettant d'associer chaque nouveau point calculé à une trajectoire existante.

L'ensemble 12 de capteurs est propre à obtenir des données dans l'espace observé.

Selon l'exemple décrit, l'ensemble 12 de capteurs comporte une unité ADS 14, une unité WAM 16 et un radar 18.

L'unité ADS 14 est un système de surveillance coopératif pour le contrôle du trafic aérien et d'autres applications connexes. Un avion équipé d'une unité ADS 14 détermine sa position par un système de positionnement par satellite (GPS) et envoie périodiquement cette position et d'autres informations aux stations au sol.

L'abréviation ADS renvoie à la dénomination anglaise correspondante de *« Automatic Dépendent Surveillance »* signifiant littéralement *« surveillance de dépendance automatique »*.

Une telle unité ADS 14 est parfois aussi appelée unité-B, l'abréviation ADS-B renvoyant à la dénomination anglaise correspondante de *« Automatic Dépendent Surveillance-Broadcast »* signifiant littéralement *« surveillance de dépendance automatique-multidiffusion »*.

Une unité WAM 16 utilise les données de plusieurs capteurs pour obtenir la localisation d'un avion.

L'abréviation WAM renvoie à la dénomination anglaise correspondante de « *Wide Area Multilateration* » signifiant littéralement « *multilatéralisation à zone étendue* » et désigne une technologie de surveillance d'avions basée sur le principe de la différence de temps d'arrivée qui est utilisée dans un aéroport.

Par exemple, l'unité WAM 16 collecte les données provenant de plusieurs antennes au sol pour appliquer des calculs mathématiques permettant d'obtenir la position de l'avion.

Un radar 18 permet de détecter la présence d'avions dans le ciel et de déterminer leur position. Le radar 18 émet des impulsions électromagnétiques dans le ciel, et la détection et la localisation d'un avion sont obtenues par l'analyse de l'onde réfléchie par l'avion et retransmise dans la direction du radar 18.

Selon l'exemple de la figure 1, le système de pistage 10 comporte un module d'analyse 20 et un module de détection 22 d'anomalies.

Le module d'analyse 20 est propre à analyser les données des capteurs pour calculer des nouvelles données.

En particulier, le module d'analyse 20 est propre à prédire la trajectoire d'un aéronef.

Un tel module d'analyse 20 est souvent désigné sous la dénomination anglaise de *« tracker »* signifiant littéralement « *pisteur »*.

Pour cela, le module d'analyse 20 utilise une technique de fusion de données impliquant généralement un filtre de Kalman.

La technique de fusion dépend de paramètres représentatifs de l'environnement, tels le bruit du capteur.

Ces paramètres sont fixés en fonction de l'environnement habituellement rencontré. Par exemple, si le capteur considéré présente le plus souvent un bruit gaussien, il sera fixé des paramètres correspondant à un tel bruit.

Le module de détection 22 d'anomalies est propre à mettre en oeuvre les étapes d'un procédé de détection d'anomalies dans l'espace observé.

Pour cela, selon l'exemple proposé, le module de détection 22 d'anomalies comporte une unité de formation 24 et une unité de détection 26 dont les rôles apparaîtront dans la suite de la description.

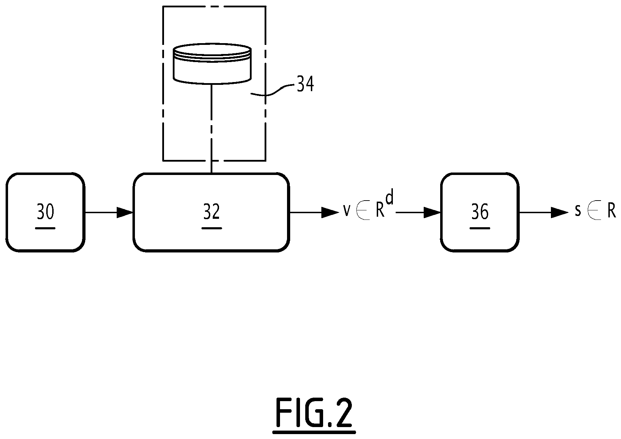

Un exemple de mise en oeuvre du procédé de détection d'anomalies est maintenant décrit en référence à la figure 2.

Le procédé de détection d'anomalies vise à détecter des anomalies dans l'espace observé par le système de pistage 10.

La détection est ici à prendre dans un sens large au sens où il peut simplement être déterminé une probabilité qu'il existe une anomalie dans une partie de l'espace observé.

Une telle probabilité sera ici exprimée sous forme d'un score de normalité, c'est une valeur représentative de la probabilité de présence d'une anomalie.

Une anomalie correspond à une dégradation de la qualité du pistage par le système de pistage 10.

De ce fait, le score de normalité peut également être interprété comme un score d'évaluation de la qualité du pistage réalisé par le système de pistage 10.

Les causes d'une telle dégradation du système de pistage 10 peuvent être multiples. Cela peut provenir d'un problème météorologique ou extérieur comme un très fort orage, d'un radome gelé d'un radar en altitude, d'une éruption solaire.

Il peut aussi s'agir d'un problème lié à un capteur, comme un problème de joint torique d'un radar tournant (crée un décalage en azimut sur les positions envoyées par le radar) ou un problème de bruit anormal sur les données d'un capteur.

La cause de la dégradation peut être une attaque cyber dans laquelle des fausses données de capteurs sont envoyées.

Selon encore un autre exemple, le problème peut provenir d'un dysfonctionnement du module d'analyse 20.

Bien entendu, une dégradation peut correspondre à la présence de plusieurs des exemples de causes précitées.

Le procédé de détection comporte une étape de formation et une étape de détection.

Lors de l'étape de formation de vignettes, le module de détection 22, et plus précisément l'unité de formation 24, forme des vignettes.

Cette étape est schématisée par un bloc 30 sur la figure 2.

Une vignette rassemble un ensemble des données accessibles au système de pistage 10 sur une zone respective et un intervalle de temps prédéfini.

Les données comportent au moins des données provenant d'un ou plusieurs capteurs de l'ensemble 12 de capteurs.

Il est supposé pour la suite que les données de la vignette sont uniquement les données de l'unité ADS 14, de l'unité WAM 16 et du radar 18, ce qui permet une collection rapide de ces valeurs.

Toutefois, l'ensemble des données peut comporter d'autres éléments.

Selon un exemple, l'ensemble des données de chaque vignette comprennent une ou plusieurs trajectoires reconstruites.

Selon un autre exemple, l'ensemble des données d'une vignette comportent les données calculées par le système de pistage 10.

En variante, l'ensemble des données d'une vignette comporte les données des capteurs, les données reconstruites par le système de pistage 10 et les données calculées par le système de pistage 10.

L'ensemble des vignettes couvre l'espace observé en temps et en espace.

Ainsi, les zones associées à chaque vignette pavent l'espace observé par le système de pistage 10 et l'ensemble des intervalles de temps prédéfinis couvre un intervalle de temps d'observation.

A titre d'exemple et sans que cela soit limitatif, la vignette peut correspondre à une zone de quelques dizaines de kilomètres et un intervalle de temps d'une heure.

Une vignette correspond ainsi à un volume limité de l'espace (cellule) sur une période temporelle finie. Une vignette est donc une vision spatialement et temporellement locale des données des capteurs et éventuellement du pistage réalisé par le système de pistage 10.

Il est également possible de limiter une vignette à un espace bidimensionnel dans la mesure où les aéronefs volent à des altitudes fixées par les couloirs aériens.

Dans un tel cas, seules la latitude et la longitude sont prises en compte.

A l'issue de l'étape de formation, l'unité de formation 24 dispose ainsi d'un ensemble de vignettes.

Lors de l'étape de détection, le module de détection 22 détecte la présence éventuelle d'anomalies dans la vignette.

Pour cela, l'unité de détection 26 du module de détection 22 applique une fonction de détection d'anomalies sur l'ensemble des données de la vignette.

Une telle fonction de détection d'anomalies est représentée schématiquement sur la figure 2.

Cette fonction de détection d'anomalies est obtenue par une procédure d'apprentissage.

La procédure d'apprentissage comprend une étape d'apprentissage d'une représentation vectorielle des vignettes.

Dans ce contexte, une représentation vectorielle correspond à la projection d'éléments de $\mathbb{R}^{n \times m \times c}$ (espace des images ayant c couleurs, n pixels dans leur longueur et m pixels dans leur largeur) dans un espace de $\mathbb{R}^{d}$ (espace vectoriel de dimension d).

Une telle représentation permet de réduire le nombre de variables nécessaires pour exprimer l'information et de pouvoir manipuler ces données comme des vecteurs donnant ainsi accès à des outils mathématiques connus comme le calcul de distance. Il en résulte une mise en oeuvre simplifiée. La fonction donnant la représentation correspond au bloc 32 sur la figure 2 et l'apprentissage est schématisée par la partie 34 sur la figure 2.

L'étape d'apprentissage consiste ici à apprendre une première sous-fonction qui est un réseau de neurones.

Le réseau de neurones comporte une succession ordonnée de couches de neurones dont chacune prend ses entrées sur les sorties de la couche précédente.

Plus précisément, chaque couche comprend des neurones prenant leurs entrées sur les sorties des neurones de la couche précédente, ou bien sur les variables d'entrée pour la première couche.

En variante, des structures de réseaux de neurones plus complexes peuvent être envisagées avec une couche qui peut être reliée à une couche plus lointaine que la couche immédiatement précédente.

À chaque neurone est également associée une opération, c'est-à-dire un type de traitement, à effectuer par ledit neurone au sein de la couche de traitement correspondante.

Chaque couche est reliée aux autres couches par une pluralité de synapses. Un poids synaptique est associé à chaque synapse, et chaque synapse forme une liaison entre deux neurones. C'est souvent un nombre réel, qui prend des valeurs positives comme négatives. Dans certains cas, le poids synaptique est un nombre complexe.

Chaque neurone est propre à effectuer une somme pondérée des valeur(s) reçue(s) de la part des neurones de la couche précédente, chaque valeur étant alors multipliée par le poids synaptique respectif de chaque synapse, ou liaison, entre ledit neurone et les neurones de la couche précédente, puis à appliquer une fonction d'activation, typiquement une fonction non-linéaire, à ladite somme pondérée, et à délivrer en sortie dudit neurone, en particulier aux neurones de la couche suivante qui lui sont connectés, la valeur résultant de l'application de la fonction d'activation. La fonction d'activation permet d'introduire une non-linéarité dans le traitement effectué par chaque neurone. La fonction sigmoïde, la fonction tangente hyperbolique, la fonction de Heaviside sont des exemples de fonction d'activation.

En complément facultatif, chaque neurone est également apte à appliquer, en outre, un facteur multiplicatif, également appelé biais, à la sortie de la fonction d'activation, et la valeur délivrée en sortie dudit neurone est alors le produit de la valeur de biais et de la valeur issue de la fonction d'activation.

A titre d'exemple spécifique, la première sous-fonction est ici un réseau neuronal résiduel.

Un réseau neuronal résiduel est un réseau de neurones pour lequel au moins un neurone d'une couche interagit avec un neurone d'une couche non voisine.

Un tel réseau est souvent dénommé par la dénomination anglaise abrégée correspondant, à savoir ResNet.

En l'espèce, l'apprentissage de la première sous-fonction est mis en oeuvre à partir d'un jeu de données labellisé pour obtenir une première sous-fonction apprise propre à mettre en oeuvre une tâche prédéfinie.

La représentation vectorielle est alors l'avant-dernière couche de la première sous-fonction apprise.

Ainsi, il est utilisé une tâche prédéfinie qui n'a pas de lien avec la tâche de déterminer la présence d'anomalies. La tâche prédéfinie sert uniquement à permettre l'apprentissage des paramètres libres du réseau de neurones qui sont définis à travers l'opération d'apprentissage. En ce sens, la tâche prédéfinie peut être qualifiée de tâche prétexte, dénomination qui sera utilisée dans ce qui suit.

En ce sens, il peut être considéré que l'entraînement sur la tâche prétexte est un pré-entraînement permettant d'obtenir des poids pré-entraînés.

Dans l'exemple décrit, la première sous-fonction a été entraînée sur une tâche de classification.

Typiquement, la première sous-fonction est entraînée pour reconnaître un ou plusieurs éléments dans une base de données annotées comme une base d'images de type ImageNet.

Selon un premier exemple correspondant à un cadre non supervisé, les poids de la première sous-fonction ainsi pré-entraînés sont conservés tels quels.

Selon un deuxième exemple correspondant à un cadre supervisé, les poids de la première sous-fonction ainsi pré-entraînés sont affinés par un apprentissage sur une tâche de spécialisation.

En l'espèce, une tâche de spécialisation est une tâche spécifique au domaine du contrôle de trafic aérien.

Ce qui vient d'être décrit peut être formulé de manière plus formelle comme suit.

La première sous-fonction est un réseau de neurones selon l'architecture ResNet qui est la composition de k opérations linéaires paramétrées par les poids d'apprentissage des neurones $\Theta = (W_i, b_i)$ ainsi que de k opérations non linéaires $\psi_i$ (fonction d'activation).

Il vient ainsi :

$$\forall\, i\, \leq\, k, \qquad f_i\,(z_{i-1}) = \psi_i(W_i\, z_{i-1} + b_i + z_{i-2})$$

$$y = \Psi_\Theta(x) = f_k\, {}^\circ \ldots\, {}^\circ\, f_i\, {}^\circ \ldots\, {}^\circ\, f_1(x)$$

Où :

- $i$ est un entier
- $f_i$ est une opération linéaire paramétrisée,
- $z_{i-1}$ est le vecteur de neurones de la couche $i$ - 1,
- $W_i$ est la matrice de poids de l'opération linéaire de la couche $i$,
- $\Theta = ((W_i, b_i)_{i=1,\ldots,k})$
- $b_i$ est le biais de l'opération linéaire de la couche i,
- $y$ est la sortie du réseau de neurones, et
- $\Psi_\Theta$ est la fonction paramétrée par $\Theta$ formée par le réseau de neurones, et
- $^\circ$ désigne l'opération mathématique de composition.

La première sous-fonction est entrainée sur une tâche de classification grâce à un jeu de données labellisé $D = \{(x_i, y_i)_i\}$ par minimisation d'un critère.

Le critère choisi est, par exemple, le suivant :

$$\Theta = \min_\theta \sum_{(x,y) \in D} L\,(y; \Psi_\theta(x))$$

où L est une fonction coût visant à estimer la distance entre la classe prédite et la classe labellisée.

Le critère est minimisé en mettant les poids à jour à chaque itération par rétro-propagation.

Comme indiqué précédemment, une fois cette tâche apprise, la représentation vectorielle d'une image est obtenue en enlevant la dernière couche du réseau et en figeant les poids du réseau.

En notant V l'opérateur de représentation vectorielle d'une vignette x, il vient avec les notations précédentes :

$$V : R^{n \times n} \rightarrow R^d$$

$$x \quad \mapsto V_\theta(x) = \; f_{k-1} \circ \dots \circ f_i \circ \dots \circ f_1(x)$$

d désigne ici un paramètre pouvant varier. Par exemple, une valeur de 2048 a été utilisée par le demandeur.

La procédure d'apprentissage comprend également une étape d'obtention d'une fonction de détection d'anomalies à partir de la représentation vectorielle apprise.

La fonction de détection est propre à fournir un score de normalité à partir de la représentation vectorielle d'une vignette.

Lors de l'étape d'obtention, la fonction de détection d'anomalies est apprise par une technique d'apprentissage.

Selon un premier exemple de mise en oeuvre, il est entraîné une deuxième sous-fonction sur la représentation vectorielle d'un sous-ensemble de vignettes sans anomalie.

Selon l'exemple de la figure 2, la deuxième sous-fonction est une machine à vecteurs de support à classe unique et correspond au bloc 36.

Un tel élément est plus souvent désigné sous l'appellation « *One-class SVM* » renvoyant à la dénomination anglaise correspondante de *« One-class Support-Vector Machine ».*

Un exemple spécifique de technique permettant d'obtenir un score de normalité est maintenant décrit.

Cette technique cherche à projeter les points observés dans un espace de plus grande dimension et à trouver une hypershère qui contient presque tous les points. Les points à l'intérieur de la sphère sont considérés comme normaux et ceux en dehors sont considérés comme des anomalies.

La représentation correspondant à l'image du projecteur $\phi$ et l'hypershère sont obtenues en résolvant le problème d'optimisation suivant :

$$\min_{r \in R, \xi \in R^d, c \in F} r^2 + \frac{1}{vd} \sum_i \xi_i$$

$$s.c. \; \forall x \in D, i \le n, \left\| \phi\big(V_\theta(x)\big) - c \right\|^2 \le r^2 + \xi_i, \quad \xi_i \ge 0$$

Où :

- $\phi; R^d \rightarrow F$ est l'application de projection (projecteur). *d* est la dimension de l'espace d'entrée (dans notre cas, la dimension de la représentation vectorielle des vignettes *V*) et *F* l'image du projecteur (sa dimension est vue comme un hyper paramètre). On impose seulement qu'un produit scalaire d'éléments de *F* puisse être exprimé sous la forme d'un noyau sur les éléments de $\mathbb{R}^d$.
- r est le rayon de l'hypersphère,
- $\nu$ est une pondération $\nu \in [0,1]$ considérée comme un hyper paramètre.
- *s. c.* désigne l'expression sous la contrainte de,
- c est la position du centre de l'hypersphère,
- $\xi$ est une variable de relaxation de la frontière de l'hypersphère permettant d'accepter des points en dehors de l'hypersphère mais très proche de sa frontière.

Ce problème peut se reformuler à travers la fonction duale de Lagrange, en introduisant $\alpha, \beta$ comme coefficient de Lagrange :

$$g(\alpha, \beta) = \inf_{r, \xi, c} L(r, \xi, c, \alpha, \beta)$$

$$= \inf_{r, \xi, c} r^2 + \sum_i \alpha_i \{ \|\phi(x_i) - c\|^2 - r^2 - \xi_i \} + \frac{1}{vd} \sum_i \xi_i - \sum_i \beta_i \xi_i$$

En dérivant par rapport aux paramètres, il est obtenu les trois relations suivantes :

$$\frac{\partial L}{\partial r} = 2r\left(1 - \sum_i \alpha_i\right) = 0 \Rightarrow \sum_i \alpha_i = 1$$

$$\frac{\partial L}{\partial \xi_i} = \frac{1}{vl} - \alpha_i - \beta_i = 0 \Rightarrow 0 \leq \alpha_i \leq \frac{1}{vd}$$

$$\frac{\partial L}{\partial c} = -2 \sum_i \alpha_i(\Phi(x_i) - c) = 0 \Rightarrow c = \sum_i \alpha_i \Phi(x_i)$$

Ainsi, la fonction duale de Lagrange s'écrit :

$$g(\alpha, \beta) = \sum_i \alpha_i \left\| \Phi(x_i) - \sum_j \alpha_j \Phi(x_j) \right\|^2 \; si \; 0 \leq \alpha_i \leq \frac{1}{vd} \; et \sum_i \alpha_i = 1$$

$$- \infty \; sinon$$

Le problème dual s'écrit alors :

$$\max_{\alpha} \sum_i \alpha_i \langle \Phi(x_i) | \Phi(x_i) \rangle - \sum_{i,j} \alpha_i \alpha_j \langle \Phi(x_i) | \Phi(x_j) \rangle \; s.c. \; \sum_i \alpha_i = 1 \; et \; 0 \leq \alpha_i \leq \frac{1}{vd}$$

Un score de normalité peut facilement ensuite être calculé à partir de la fonction de décision f s'écrivant :

$$f(\Phi(x)) = r^2 + 2\sum_i \alpha_i \langle \Phi(x_i) | \Phi(x) \rangle - \langle \Phi(x) | \Phi(x) \rangle - \sum_{i,j} \alpha_i \alpha_j \langle \Phi(x_i) | \Phi(x_j) \rangle$$

La fonction de décision est la fonction définie par *f*. Elle permet d'identifier les anomalies (plus souvent désignée par la dénomination anglaise correspondante de « outliers ») : Les points possédant les plus hautes valeurs sont considérés comme des anomalies. Cette fonction peut être normalisée entre 0 et 1 pour rendre son interprétation plus intuitive.

Un tel premier exemple correspond à une technique d'apprentissage non-supervisée.

De fait, à partir d'une base de données supposées normales (sans anomalies), il est dérivé une fonction de détection qui va évaluer pour une nouvelle vignette si cette vignette ressemble à celles déjà observées ou si elle en diffère.

Selon un deuxième exemple de mise en oeuvre de l'étape d'obtention, l'étape d'obtention est mise en oeuvre à l'aide d'un réseau de neurones adapté pour mesurer la distance d'une vignette à un ensemble de vignettes considérées comme normales.

Un tel ensemble de vignettes peut être obtenu en évaluant les critères ESASSP ou en effectuant une annotation manuelle par un expert.

A titre d'illustration, la fonction de détection donne en sortie un score de normalité qui correspond à la valeur de projection de la représentation vectorielle des vignettes dans un espace appris.

L'espace appris peut notamment être obtenu par une approche contrastive, c'est-à-dire par une comparaison des exemples partageant certaines propriétés (exemples dit positifs) avec un ensemble d'exemples qui ne partagent pas ces propriétés (exemples dit négatifs).

Le score de normalité est alors défini comme l'inverse de la distance par rapport au centre d'un ensemble de vignettes considérées par un expert comme dépourvues d'anomalies.

Dans un tel deuxième exemple, la technique d'apprentissage est semi-supervisée du fait de la fourniture initiale de l'ensemble de vignettes considérées comme normales.

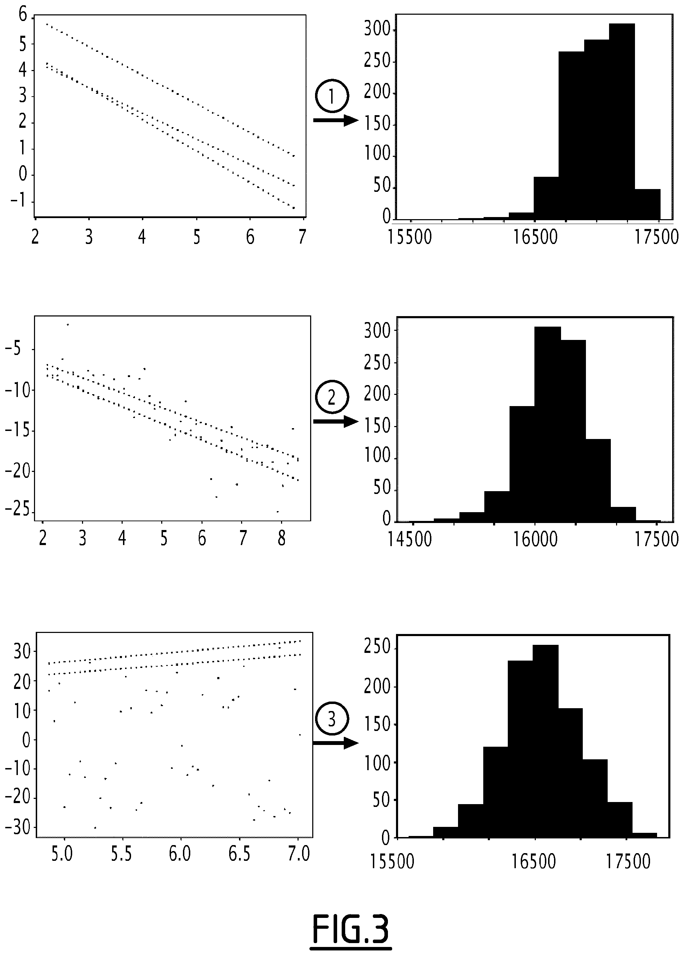

Il est maintenant illustré en référence à la figure 3 les résultats obtenus par mise en oeuvre du procédé décrit dans une simulation.

Pour cela, il est utilisé trois jeux de données synthétiques correspondant aux cas 1, 2 et 3 sur la figure 3.

Le cas 1 correspond à un jeu de données simulant des données correspondant à des données réalistes provenant des trois capteurs. En ce sens, le jeu de données du cas 1 correspond à un jeu de données normales.

Les fonctions utilisées pour la génération des données sont les suivantes :

$$\forall i \leq n \begin{cases} y_i^{(1)}(x) = 1{,}1 \times (a_i \times s_i)x + 1{,}1 \times b_i \\ y_i^{(2)}(x) = (a_i \times s_i)x + 1{,}3 \times b_i \\ y_i^{(3)}(x) = 0{,}899 \times (a_i \times s_i)x + b_i \end{cases}$$

Où :

- i désigne l'indice d'un point du jeu de données,
- n désigne le nombre de points dans le jeu de données,
- $y_i^{(1)}(x)$ désigne l'ordonnée du point i de type 1 du jeu de données
- $s_i \sim \mathcal{U}$ ([-1,1]) signifiant que la variable $s_i$ suit une loi uniforme dont les valeurs sont comprises entre -1 et 1,
- $a_i \sim \mathcal{U}$ ([-1,4]) signifiant que la variable $a_i$ suit une loi uniforme dont les valeurs sont comprises entre -1 et 4, et
- $b_i \sim \mathcal{N}$ (0,5) signifiant que la variable $b_i$ suit une loi normale de valeur moyenne 0 et de variance 5.

A gauche de la flèche marquée 1, il est représenté la vignette correspondante.

Il apparaît dans cette vignette que chaque jeu de données correspond à une trajectoire rectiligne, chaque trajectoire rectiligne présentant une variation similaire (coefficient directeur et ordonnée à l'origine similaires).

Le cas 2 correspond à un jeu de données simulant des données correspondant à des données où l'un des capteurs présente un rapport signal à bruit beaucoup plus faible que les deux autres capteurs. Il est supposé néanmoins que le signal provenant du capteur ayant un rapport signal à bruit réduit est effectivement exploitable. En ce sens, le jeu de données du cas 2 correspond à un jeu de données bruitées.

Avec les mêmes notations que pour le cas 1, les fonctions utilisées pour la génération des données sont alors les suivantes :

$$\forall i \leq n \begin{cases} y_i^{(1)}(x) = (a_i \times s_i)x + b_i + \mathcal{N}(0{,}2{,}5) \\ y_i^{(2)}(x) = (a_i \times s_i)x + 1{,}3 \times b_i \\ y_i^{(3)}(x) = 0{,}899 \times (a_i \times s_i)x + b_i \end{cases}$$

où $\mathcal{N}$ (0,2,5) désigne un nombre obtenu par utilisation d'une loi normale de valeur moyenne 0 et de variance 2,5.

Un tel cas correspond donc à simuler un bruit gaussien.

La vignette résultante de cette simulation de données bruitées est représentée à gauche de la flèche marquée 2.

Le cas 3 correspond à un jeu de données simulant des données correspondant à des données où l'un des capteurs présente des données inexploitables. En ce sens, le jeu de données du cas 3 correspond à un jeu de données corrompues.

Avec les mêmes notations que pour le cas 1, les fonctions utilisées pour la génération des données sont alors les suivantes :

$$\forall i \leq n \begin{cases} y_i^{(1)}(x) = \big(\mathcal{U}([-1,1]) \times \mathcal{U}([-1,4])\big)x + b_i + \mathcal{N}(0{,}5) \\ y_i^{(2)}(x) = (a_i \times s_i)x + 1{,}3 \times b_i \\ y_i^{(3)}(x) = 0{,}899 \times (a_i \times s_i)x + b_i \end{cases}$$

Où :

- $\mathcal{U}$ ([-1,1]) désigne un nombre obtenu par utilisation d'une loi uniforme dont les valeurs sont comprises entre -1 et 1,
- $\mathcal{U}$ ([-1,4]) désigne un nombre obtenu par utilisation d'une loi uniforme dont les valeurs sont comprises entre -1 et 4, et
- $\mathcal{N}$ (0,2,5) désigne un nombre obtenu par utilisation d'une loi normale de valeur moyenne 0 et de variance 2.5.

La vignette résultante de cette simulation de données bruitées est représentée à gauche de la flèche marquée 3 sur la figure 3.

La partie droite de la figure 3 représente les distributions de score de normalité obtenues pour tous les jeux de données simulés.

Les scores de normalité sont les valeurs prises par la fonction de décision. Les scores les plus faibles identifient les anomalies.

La distribution de scores est obtenue en analysant le score de chaque vignette, l'ensemble des vignettes étant associé à un score respectif.

La comparaison des histogrammes des cas 2 et 3 avec celui du cas 1 montre l'existence d'un décalage des valeurs vers la gauche.

Cela permet de montrer qu'il est possible de discriminer le cas 1 avec les cas 2 et 3, c'est-à-dire discriminer entre des données normales et des données bruitées ou corrompues.

Il peut aussi être observé un décalage plus prononcé pour le cas 2 par rapport au cas 3. Ainsi, l'analyse des histogrammes permet de discriminer entre les données corrompues et les données bruitées, c'est-à-dire entre des données inexploitables et des données anormales mais exploitables.

A travers cet exemple, il a été montré que le procédé qui vient d'être décrit permet donc de détecter avec une bonne efficacité une anomalie.

Le présent procédé utilise des vignettes correspondant à un volume limité de l'espace ainsi qu'une période temporelle finie. De ce fait, le procédé est une approche locale à la fois en temps et en espace.

Cela permet une analyse plus fine de la situation. En particulier, les effets ne sont pas moyennés sur toute une FIR, contrairement à une technique d'évaluation des critères de la norme ESASSP.

Cette finesse d'analyse n'empêche pas qu'en cas de besoin, il est possible de fournir une analyse globale, par exemple en agrégeant les scores de normalités.

Il pourrait être noté également que le procédé peut être mis en oeuvre de manière totalement non supervisée. Cela présente un réel avantage dans le sens où le procédé peut facilement s'adapter à de nouvelles situations ou de nouveaux contextes.

Par exemple, le procédé peut être utilisé dans d'autres contextes que l'ATM et notamment dans l'UTM.

L'abréviation ATM renvoie à la dénomination anglaise de *« Air Traffic Management »* qui désigne la gestion du trafic des aéronefs habités (généralement les avions de ligne) alors que l'abréviation UTM renvoie à la dénomination anglaise de *« Unmanned Aircraft System Traffic Management »* qui désigne la gestion du trafic des drones.

Cette indépendance permet d'éviter de redéfinir les fonctions impliquées si l'utilisation du système de pistage 10 est amenée à évoluer.

En ce sens, le procédé est universel au sens où il peut être adapté à tout type de système de pistage 10.

Le procédé présente aussi l'avantage de fournir une évaluation même dans des situations très dégradées dans lesquelles il n'est plus possible de calculer une trajectoire reconstruite.

Il peut aussi être noté que pour des données provenant des capteurs, le procédé reporte la charge calculatoire sur l'apprentissage. De ce fait, en phase d'inférence (étape de contrôle), les calculs peuvent être effectués en temps réel.

En outre, l'apprentissage n'implique pas de calculer la trajectoire réelle, ce qui correspond à un apprentissage consommant moins de ressources calculatoires qu'un apprentissage pour l'évaluation de critères ESASSP.

Le procédé est aussi robuste aux données d'entrée dans la mesure où les données provenant de l'ensemble 12 de capteurs ne sont pas nécessairement régulières et sont fournies de manière brute par les capteurs de l'ensemble 12 de capteurs.

Le procédé qui vient d'être décrit constitue donc un procédé d'évaluation locale et non supervisée en temps réel de la qualité de service du pistage aéronautique.

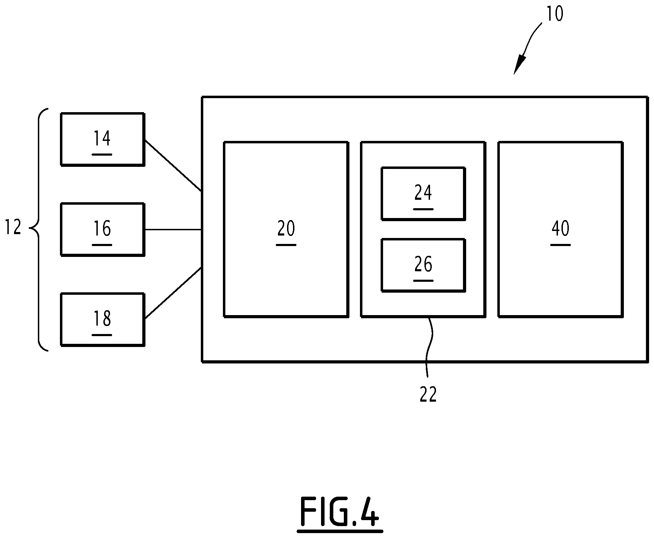

Selon l'exemple de la figure 4, le système de pistage 10 est muni du module d'analyse 20, du module de détection 22 décrit précédemment et d'un module additionnel qui est un module de correction 40.

Le module de correction 40 est un module de correction d'anomalies dans l'espace observé.

A ce titre, le module de correction 40 est propre à mettre en oeuvre une étape d'identification d'une cause possible de la présence d'une anomalie par application d'une fonction d'identification sur la ou les vignettes dans lesquelles la présence d'une anomalie a été détectée par le module de détection 22.

Avantageusement, le module de correction est propre à tester une action correctrice associée à la cause identifiée. Ceci permet de déterminer l'action correctrice la plus adaptée.

Selon un exemple particulier, la cause est une défaillance d'un capteur ou plusieurs capteurs de l'ensemble 12 de capteurs.

Dans un tel cas, l'action correctrice est la suppression de la prise en compte des données provenant du capteur présentant la défaillance.

Pour un tel exemple, il pourra être mis en oeuvre un procédé de correction d'anomalies dans l'espace observé dans lequel l'étape d'identification est spécifique.

Plus précisément, l'étape d'identification comprend une opération de génération, une opération de détection et une opération de déduction.

Lors de l'opération de génération, le module de correction génère des nouvelles vignettes.

Les nouvelles vignettes correspondent aux anciennes vignettes formées dans lesquelles des données provenant d'un ou plusieurs capteurs sont supprimées.

Ainsi, les nouvelles vignettes correspondent aux données accessibles à plusieurs sous-ensembles de capteurs distincts.

Selon un exemple, il pourra être généré l'ensemble des vignettes correspondant à toutes les configurations possibles.

Lors de l'opération de détection, le module de correction obtient du module de détection 22 la détection de la présence éventuelle d'anomalies dans les vignettes générées.

Lors de l'opération de déduction, par comparaison des résultats obtenus lors de l'opération de détection, il est possible de déduire le ou les capteurs causant l'anomalie.

Par exemple, si l'ensemble des scores de normalité sont augmentés en l'absence d'un capteur, le module de correction en déduit que ledit capteur est défaillant et doit être écarté pour améliorer la performance du système de pistage 10.

Alternativement ou en complément, il est possible de modifier les paramètres du module d'analyse 20.

Le procédé de correction donne ainsi une recommandation d'action en vue de la résolution d'une anomalie détectée.

De fait, le procédé de correction permet de réaliser une analyse causale en déterminant l'influence de plusieurs actions correctrices sur le score de normalité.

Ainsi, le procédé permet de discriminer assez rapidement les actions qui ne permettent pas la restauration de la situation nominale et celles qui le permettent.

En ce sens, le procédé de correction fournit une explication non ambiguë de la cause de la présence d'anomalies contrairement à une technique basée sur des critères ESASSP pour lesquels plusieurs anomalies différentes peuvent conduire à des valeurs similaires d'évaluation de la performance.

D'autres variantes des procédés qui viennent d'être décrits sont envisageables.

En particulier, il est possible qu'au lieu d'un score de normalité, il soit obtenu un score de performance.

Selon un exemple, le système de pistage 10 comporte, en outre, un module d'évaluation.

Le module d'évaluation est propre à déterminer la performance du système de pistage 10 en fonction du nombre d'anomalies et de la fréquence d'anomalies détectées par le module de détection 22.

Autrement formulé, le module d'évaluation sert à calculer un score de performance pour le système de pistage 10.

Il est aussi possible d'envisager de remplacer l'unité de détection 26 par une unité d'évaluation ayant pour rôle d'effectuer le calcul de performance sur les vignettes.

Le calcul de performance peut alors être basé sur des critères indépendants de la détection d'anomalies.

Dans un tel cas, le module de détection devient un module d'évaluation comportant l'unité de formation 24 et l'unité d'évaluation.

Plus généralement, le module d'évaluation ou le module de détection 22 éventuellement complété du module de correction 40 forme un module de contrôle.

Le module de contrôle est propre à contrôler l'observation par le système de pistage 10 de l'espace correspondant à au moins une vignette par application d'une fonction de contrôle sur l'ensemble des données de l'au moins une vignette.

Selon l'exemple de la figure 2, la fonction de contrôle est une fonction de détection de la présence éventuelle d'une anomalie dans la vignette.

Dans le cas de l'évaluation, la fonction de contrôle est une fonction de calcul de la performance du système de pistage 10.

Dans chacun des exemples décrits, chaque module ou sous-module est réalisé chacun sous forme d'un logiciel, ou d'une brique logicielle.

L'ensemble des modules est alors réalisé c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles., mémorisé dans une mémoire exécutable par un processeur.

En variante non représentée, chaque module ou sous-module est réalisé sous forme d'un composant logique programmable, tel qu'un FPGA (de l'anglais *Field Programmable Gate Array*), ou encore d'un circuit intégré, tel qu'un ASIC (de l'anglais *Application Spécifie Integrated Circuit).*

L'invention concerne toute combinaison techniquement possible des modes de réalisation précédemment décrits.

**Revendications**

1. Procédé de contrôle de l'observation par un système de pistage (10) d'un espace, le procédé étant mis en oeuvre par un module de contrôle (22, 40) faisant partie du système de pistage (10), le procédé de contrôle comportant :

   - une étape de formation de vignettes, chaque vignette rassemblant un ensemble des données accessibles au système de pistage (10) sur une zone respective et un intervalle de temps prédéfini, les zones associées à chaque vignette pavant l'espace observé par le système de pistage (10) et l'ensemble des intervalles de temps prédéfinis couvrant un intervalle de temps d'observation, les données comportant au moins des données de capteurs, et
   - une étape de contrôle de l'observation par un système de pistage (10) de l'espace correspondant à au moins une vignette par application d'une fonction de contrôle sur l'ensemble des données de l'au moins une vignette.

2. Procédé de contrôle selon la revendication 1, dans lequel l'ensemble des données de chaque vignette comprennent une trajectoire reconstruite.

3. Procédé de contrôle selon la revendication 1 ou 2, dans lequel le système de pistage (10) émet en sortie des données calculées, l'ensemble des données de chaque vignette comprenant les données calculées.

4. Procédé de contrôle selon l'une quelconque des revendications 1 à 3, dans lequel la fonction de contrôle est une fonction de détection de la présence éventuelle d'une anomalie dans la vignette.

5. Procédé de contrôle selon la revendication 4, dans lequel la fonction de détection d'anomalies est obtenue par un procédure d'apprentissage, la procédure d'apprentissage comportant :

   - l'apprentissage d'une représentation vectorielle des vignettes, et
   - l'obtention d'une fonction de détection d'anomalies à partir de la représentation vectorielle apprise.

6. Procédé de contrôle selon la revendication 5, dans lequel l'étape d'apprentissage comprend l'apprentissage d'une première sous-fonction à partir d'un jeu de données labellisé pour obtenir une première sous-fonction apprise propre à mettre en oeuvre une tâche prétexte, la première sous-fonction apprise étant un réseau de neurones comportant une pluralité de couches de neurones, la représentation vectorielle étant l'avant-dernière couche de la première sous-fonction apprise.

7. Procédé de contrôle selon la revendication 6, dans lequel la première sous-fonction est un réseau neuronal résiduel.

8. Procédé de contrôle selon l'une quelconque des revendications 5 à 7, dans lequel l'étape d'obtention est mise en oeuvre à l'aide de machines à vecteurs de support à classe unique.

9. Procédé de contrôle selon l'une quelconque des revendications 5 à 7, dans lequel l'étape d'obtention est mise en oeuvre à l'aide d'un réseau de neurones adapté pour mesurer la distance d'une vignette à un ensemble de vignettes considérées comme normales.

10. Procédé de contrôle selon l'une quelconque des revendications 4 à 9, dans lequel le procédé de contrôle comporte une étape d'identification d'une cause possible de la présence d'une anomalie par application d'une fonction d'identification sur la ou les vignettes dans lesquelles la présence d'une anomalie a été détectée à l'étape de mise en oeuvre, l'étape d'identification étant réalisée par le module de correction d'anomalies.

11. Procédé de contrôle selon la revendication 10, dans lequel le procédé de contrôle comporte un test d'une action correctrice associée à la cause identifiée.

12. Procédé de contrôle selon la revendication 10 ou 11, dans lequel le système de pistage (10) est propre à collecter des données provenant de plusieurs capteurs, la cause étant une défaillance d'un capteur et l'action correctrice étant la suppression de la prise en compte des données provenant du capteur présentant la défaillance.

13. Procédé de contrôle selon la revendication 12, dans lequel l'étape d'identification comprend :

- la génération des vignettes correspondant aux données accessibles à plusieurs sous-ensembles de capteurs distincts,
- la détection d'anomalies dans les vignettes générées par mise en oeuvre du procédé de détection, et
- la déduction du ou des capteurs causant l'anomalie.

14. Procédé de contrôle selon l'une quelconque des revendications 1 à 13, dans lequel la fonction de contrôle est une fonction de calcul de la performance du système de pistage (10).

15. Module de contrôle (22, 40) de l'observation par un système de pistage (10) d'un espace, le module de contrôle (22, 40) étant propre à :

- former des vignettes, chaque vignette rassemblant un ensemble des données accessibles au système de pistage (10) sur une zone respective et un intervalle de temps prédéfini, les zones associées à chaque vignette pavant l'espace observé par le système de pistage (10) et l'ensemble des intervalles de temps prédéfinis couvrant un intervalle de temps d'observation, les données comportant au moins des données de capteurs, et
- contrôler l'observation par un système de pistage (10) de l'espace correspondant à au moins une vignette par application d'une fonction de contrôle sur l'ensemble des données de l'au moins une vignette.

16. Système de pistage (10) muni d'un module de contrôle (22, 40) selon la revendication 15.

## FIG.1

$$v \in R^d \qquad s \in R$$

# FIG.2

**FIG.3**

**FIG.4**

Europäisches
Patentamt

European
Patent Office

Office européen
des brevets

# RAPPORT DE RECHERCHE EUROPEENNE

Numéro de la demande

EP 24 21 0053

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 3 547 159 A1 (THALES SA [FR]) 2 octobre 2019 (2019-10-02) * alinéas [0001] - [0004], [0021], [0029] - [0052], [0055] - [0058], [0093], [0096], [0121], [0130] - [0155] * * revendication 1 * ----- | 1-11, 14-16 | INV. G08G5/00 G06N3/045 G06V20/52 G08G5/22 G08G5/72 |
| X | US 2023/306729 A1 (ANCORA ANDREA [FR] ET AL) 28 septembre 2023 (2023-09-28) * alinéas [0017] - [0019], [0036] - [0038], [0079], [0080], [0090] - [0093] * ----- | 1-13,15, 16 | |

**DOMAINES TECHNIQUES RECHERCHES (IPC)**

G08G
G06V
G06N

Le présent rapport a été établi pour toutes les revendications

| Lieu de la recherche | Date d'achèvement de la recherche | Examinateur |
|---|---|---|
| La Haye | 11 février 2025 | Van den Bosch, I |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 21 0053

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-02-2025

| Document brevet cité au rapport de recherche | Date de publication | Membre(s) de la famille de brevet(s) | Date de publication |
|---|---|---|---|
| EP 3547159 A1 | 02-10-2019 | AU 2019202155 A1 | 17-10-2019 |
| | | CN 110321521 A | 11-10-2019 |
| | | EP 3547159 A1 | 02-10-2019 |
| | | FR 3079637 A1 | 04-10-2019 |
| | | SG 10201902788T A | 30-10-2019 |
| US 2023306729 A1 | 28-09-2023 | CN 115461756 A | 09-12-2022 |
| | | EP 4128055 A1 | 08-02-2023 |
| | | FR 3108423 A1 | 24-09-2021 |
| | | US 2023306729 A1 | 28-09-2023 |
| | | WO 2021190910 A1 | 30-09-2021 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- *EUROCONTROL Spécification for ATM Surveillance System Performance*, March 2012, vol. 1, ISBN 978-2-87497-022-1